# NEW EUROPEAN PATENT SPECIFICATION

(11) **EP 0 438 847 B2**
(45) Date of publication and mention of the opposition decision: **19.11.1997**
(45) Mention of the grant of the patent: 09.11.1994
(21) Application number: 90300806.8
(22) Date of filing: 25.01.1990
(51) Int. Cl.: C10M 133/56

(54) **Succinimide compositions**
Bernsteinsäureimid-Zusammensetzungen
Compositions de succinimide

(43) Date of publication of application: 31.07.1991
(73) Proprietor: ETHYL PETROLEUM ADDITIVES LIMITED, Bracknell, Berkshire RG12 2UW (GB)
(72) Inventor: Scattergood, Roger, Reading, Berkshire RG7 1DP (GB); Walters, David, Kenvyn, Camberley, Surrey GU17 7TR (GB)
(74) Representative: Cresswell, Thomas Anthony

(56) References cited:
- EP-A- 0 061 329
- EP-A- 0 072 645
- GB-A- 1 018 982
- GB-A- 1 065 595
- GB-A- 2 140 811
- US-A- 4 648 980
- US-A- 4 663 064
- US-A- 4 747 964

## Description

This invention relates to succinimide dispersants and to compositions containing them. More particularly, this invention relates to aliphatic succinimides and aliphatic succinimide-containing compositions of enhanced performance capabilities.

A continuing problem in the art of lubrication is to provide lubricant compositions which satisfy the demands imposed upon them by the original equipment manufacturers. One such requirement is that the lubricant not contribute to premature deterioration of seals, clutch face plates or other parts made from fluoroelastomers. Unfortunately, and as is well known, succinimide dispersants commonly used in oils tend to exhibit a strong adverse effect upon fluoroelastomers, by causing them to lose their flexibility and tensile strength, to become embrittled, and in severe cases, to disintegrate. It has been postulated that the co-presence of zinc-containing additives such as zinc dialkyldithiophosphates tends to increase the severity of this problem. Contemporary test methods for evaluating fluoroelastomer compatibility of lubricant compositions are the Volkswagen P.VW 3334 Seal Test and the CCMC Viton Seal Test (CEL L-39-T-87 Oil/Elastomer Compatibility Test). An effective, practical way of overcoming this adverse property of succinimide dispersants would be a welcome contribution to the art.

Complicating the foregoing problem is the desirability at the same time of providing succinimides which exhibit adequate performance in ASTM Sequence VE engine tests. In many respects the chemical requirements in a dispersant to achieve good VE test results and exhibit little adverse effect upon fluoroelastomeric parts appear mutually incompatible. Thus it has proven difficult to achieve both of these objectives in a single formulation using prior art succinimide dispersants.

European Patent Specification Publication EP-A-0 072,645 published February 23, 1983 claiming priority from U.S. application Ser. No. 293,146 filed August 17, 1981 is concerned with providing improved lubricating oil dispersants. However in this case the objective of the applicants (Wisotsky, Block, Brownawell, Chen, and Gutierrez) was less severe -- that of providing lubricating oil compositions that could be used both in gasoline and diesel engine formulations while meeting the then-current performance requirements for both types of engines. To achieve those objectives they resorted to a two-step procedure comprising (a) in a first step reacting an oil-soluble polyolefin succinic anhydride, the olefin being a C₃ or C₄ olefin, with an alkylene polyamine of the formula H₂N(CH₂)ₙ(NH(CH₂)ₙ)ₘNH₂ wherein n is 2 or 3 and m is 0 to 10, and (b) reacting the product of step (a) with a dicarboxylic acid anhydride. In step (a) the polyolefin succinic anhydride is reacted with the polyamine in a molar ratio of from 1.0 to 2.2 moles of polyolefin succinic anhydride per mole of polyamine, and in step (b) the dicarboxylic acid anhydride is selected from the group consisting of maleic anhydride, succinic anhydride and C₁₋₁₈ alkenyl or alkyl succinic anhydrides and is in sufficient molar proportion to provide a total mole ratio of from 2.3 to 3.0 moles of anhydride compounds per mole of polyamine.

In explaining their invention applicants Wisotsky, Bloch, Brownawell, Chen, and Gutierrez state:

"The present invention ... [requires] a particular two-step reaction sequence characterized by ... an overall mole ratio of anhydride to polyamine within a relatively narrow and critically defined range. These parameters have been found essential to provide lubricating oil compositions which give demonstrated performance values in engine tests required to qualify for the highest grade service classifications for both gasoline and diesel engine lubricating oils."
They further point out that the final overall mole ratio in the finished dispersant is preferably 2.3 to 2.5 moles of the anhydrides per mole of polyamine. US-A-4,686,054 to Wisotsky, Bloch, Brownawell, Chen, and Gutierrez contains the same teachings as in the foregoing published European Patent Specification.

US-A-4,747,964 to Durand, Binat, and Parc, seeks to improve upon the dispersant efficiency of materials of the type produced according to the above Wisotsky et al patents by subjecting the succinimide products to a further after-treatment with an organic compound having several hydroxyl and/or amine groups, such as tris-hydroxymethylaminomethane, trimethylolpropane, pentaerythritol, and similar compounds. While improvements in dispersant performance are reported by Durand et al, such after-treatment necessarily involves additional processing and attendant increase in processing and product costs.

The present invention involves the additional important discovery of ways of providing sufficiently improved lubricant performance as to enable the finished lubricants to exhibit adequate performance in ASTM Sequence VE engine tests while retaining fluoroelastomer compatibility of the type described in the foregoing commonly assigned application. Indeed, this invention makes possible in its preferred embodiments the provision of lubricant compositions and additive concentrates therefor which are capable of passing both the ASTM Sequence VE Engine Test and the Volkswagen Seal Test. More particularly, this invention provides, inter alia, new and highly effective compositions which exhibit good dispersancy while at the same time exhibiting good compatibility with fluoroelastomers. Pursuant to preferred embodiments of this invention, there are provided novel dispersants capable of passing both the VE Test and the VW Seal Test.

Thus this invention makes it possible to achieve in a practical, cost-effective manner the more difficult objective of providing a substituted succinimide that satisfies the ASTM VE engine test sequence while exhibiting reduced adverse effects upon fluoroelastomer seals, clutch plate facings or other fluoroelastomer parts with which the lubricants come in contact during service conditions. Moreover this objective is accomplished in a manner which not only eluded the above prior applicants, Wisotsky, Bloch, Brownawell, Chen, and Gutierrez, but which they teach away from. And, in accordance with preferred embodiments, the succinimide dispersants provided by this invention are capable of providing lubricant formulations which satisfy the stringent requirements of both the VE engine test sequence to achieve API "SG" performance and the Volkswagen P.VW 3334 Seal Test.

In accordance with this invention, an improved dispersant is prepared by a process which comprises (i) reacting at least one polyamine with at least one acyclic hydrocarbyl substituted succinic acylating agent in which the substituent contains an average of at least 70 carbon atoms, and (ii) reacting the product so formed with an aliphatic vicinal dicarboxylic acylating agent selected from maleic anhydride, maleic acid, fumaric acid, malic acid and the corresponding acid halides and esters with lower alcohols the process being characterized in that in step (i) the acylating agent is reacted with the polyamine in a mole ratio of from 1.05 to 2.85 moles of acylating agent per mole of polyamine, in that in step (ii) the vicinal dicarboxylic acylating agent is employed in an amount sufficient to provide a total mole ratio of 3.05 to 4.5 moles of acylating agents per mole of polyamine and in that the reactants are employed in relative proportions such that the molar ratio of acylating agent(s) in (i) : acylating agent(s) in (ii) is at least 1.45:1.

Other compounds which solve the technical problem of the present patent are disclosed in EP-A-0 438 849.

In one of its preferred embodiments, this invention involves reacting in step (i) the acylating agent with the polyamine in a mole ratio of at least 2:1.

Another embodiment of this invention is the provision of a dispersant prepared as above having the ability when formulated in a finished engine lubricating oil of satisfying the requirements of the ASTM sequence VE engine tests for API "SG" performance (see ASTM 315 H, part III Seq. VE), and the requirements of the Volkswagen P.VW 3334 Seal Test and/or the requirements of the CMC Viton Seal Test (CECL L-39-T-87 Oil/Elastomer Compatibility Test).

In a preferred embodiment of this invention the reactants are employed in relative proportions such that the molar ratio of acylating agent(s) in (i) : acylating agent(s) in (ii) is in the range of 1.45:1 to 2.70:1.

Another embodiment of this invention involves the provision of lubricating oil additive concentrates containing a minor amount of an improved dispersant composition of this invention.

Still another embodiment of this invention is a lubricating oil, especially a crankcase lubricating oil, containing an minor amount of an improved dispersant composition of this invention.

A still further embodiment of this invention is the process for producing the improved dispersant compositions of this invention.

Pursuant to still further embodiments of this invention there are provided lubricating oil additive concentrates and lubricating oil compositions as just described which additionally contain a zinc-containing additive complement, especially one or a mixture of zinc dihydrocarbyldithiophosphates, such as one or a combination of zinc dialkyldithiophosphates, one or a combination of zinc diaryldithiophosphates, or a combination of one or more zinc dialkyldithiophosphates with one or more zinc diaryldithiophosphates.

These and other embodiments and features of this invention will be apparent from the ensuing description and appended claims.

Acyclic hydrocarbyl-substituted succinic acid acylating agents and methods for their preparation are well known to those skilled in the art and are extensively reported in the patent literature. See, for example the following U.S. Patents:

| | | |
|---|---|---|
| 3,018,247 | 3,231,587 | 3,399,141 |
| 3,018,250 | 3,272,746 | 3,401,118 |
| 3,018,291 | 3,287,271 | 3,513,093 |
| 3,172,892 | 3,311,558 | 3,576,743 |
| 3,184,474 | 3,331,776 | 3,578,422 |
| 3,185,704 | 3,341,542 | 3,658,494 |
| 3,194,812 | 3,346,354 | 3,658,495 |
| 3,194,814 | 3,347,645 | 3,912,764 |
| 3,202,678 | 3,361,673 | 4,110,349 |
| 3,215,707 | 3,373,111 | 4,234,435 |
| 3,219,666 | 3,381,022 | |

As indicated in such prior patents, the acyclic hydrocarbyl substituted succinic acylating agents include the hydrocarbyl-substituted succinic acids, the hydrocarbyl-substituted succinic anhydrides, the hydrocarbyl-substituted succinic acid halides (especially the acid fluorides and acid chlorides), and the esters of the hydrocarbyl-substituted succinic acids and lower alcohols (e.g., those containing up to 7 carbon atoms) -- that is, hydrocarbyl-substituted compounds which can function as carboxylic acylating agents. Of these compounds, the hydrocarbyl-substituted succinic acids and the hydrocarbyl-substituted succinic anhydrides and mixtures of such acids and anhydrides are generally preferred, the hydrocarbyl-substituted succinic anhydrides being particularly preferred.

Preferably, the hydrocarbyl substituent of the succinic acylating agent used in step (i) is an alkyl or, more preferably, an alkenyl group containing 70 or more carbon atoms. Particularly preferred acylating agents for use in (i) have alkenyl substituents with a number average molecular weight (as determined by gel permeation chromatography) of at least 980 (and more preferably in the range of 1,200 to 5,000), especially where the alkenyl substituents are formed from polyolefins made from C₃ or C₄ olefins (e.g., isobutylene, 1-butene, and mixtures of butenes containing the same as the predominant components). Polyisobutenylsuccinic acids, polyisobutenyl succinic anhydrides, and mixtures of polyisobutenylsuccinic acids and polyisobutenylsuccinic anhydrides are most especially preferred for use in the practice of step (i) above.

Suitable polyamines for use in step (i) above are described in many of the above cited U.S. Patents. For best results, the polyamines should contain at least two primary amino groups in the molecule.

The preferred polyamines used in the practice of this invention are the alkylene polyamines represented by the formula

H₂N(CH₂)ₙ(NH(CH₂)ₙ)ₘNH₂

wherein n is 2 to 10 (preferably 2 to 4, more preferably 2 to 3, and most preferably 2) and m is 0 to 10, (preferably 1 to 6). Illustrative are ethylene diamine, diethylene triamine, triethylene tetramine, tetraethylene pentamine, spermine, pentaethylene hexamine, propylene diamine (1,3-propanediamine), butylene diamine (1,4-butanediamine), hexamethylene diamine (1,6-hexanediamine), decamethylene diamine (1,10-decanediamine), and the like. Preferred for use is tetraethylene pentamine or a mixture of ethylene polyamines which approximates tetraethylene pentamine such as "DOW E-100" (a commercial mixture available from Dow Chemical Company, Midland, Michigan).

As used herein the term "succinimide" is meant to encompass the completed reaction product from steps (i) and (ii) and is intended to encompass compounds wherein the product may have amide, amidine, and/or salt linkages in addition to the imide linkage of the type that results from the reaction of a primary amino group and an anhydride moiety.

The aliphatic vicinal dicarboxylic acylating agents utilized in step (ii) above contain 4 carbon atoms in the acylation portion of the molecule. These acylating agents are selected from maleic anhydride, maleic acid, fumaric acid, malic acid, and the corresponding acid halides, or esters with lower alcohols. It will be noted that in the case of the esters, the total molecule may contain more than six carbon atoms provided that the resulting ester functions as an acylating agent.

Mixtures of two or more vicinal dicarboxylic acylating agents of the types referred to above are also suitable for use in step (ii).

The most preferred vicinal dicarboxylic acylating agents for use in step (ii) are maleic anhydride, maleic acid, fumaric acid, and malic acid.

As noted above, the succinimide dispersants of this invention are prepared by a process which comprises (i) reacting at least one acyclic hydrocarbyl substituted succinic acylating agent with at least one polyamine (preferably an alkylene polyamine), and (ii) reacting the product so formed with an aliphatic vicinal dicarboxylic acylating agent selected from maleic anhydride, maleic acid, fumaric acid, malic acid and the corresponding acid halides and esters with lower alcohols the process being characterized in that in step (i) the acylating agent is reacted with the polyamine in a mole ratio of from 1.05 to 2.85 moles of acylating agent per mole of polyamine, in that in step (ii) the vicinal dicarboxylic acylating agent is employed in an amount sufficient to provide a total mole ratio of at least 3.05 to 4.5 moles of acylating agents per mole of polyamine and in that the reactants are employed in relative proportions such that the molar ratio of acylating agent(s) in (i) : acylating agent(s) in (ii) is at least 1.45:1. For example, if the mole ratio in (i) is 1.05:1, at least 2 moles of acylating agent are used in (ii). Similarly, when the mole ratio in (i) is 2.85:1, at least 0.2 mole of acylating agent is used in (ii).

The reactions involved in steps (i) and (ii) are conducted at conventional temperatures in the range of 80°C to 200°C, more preferably 140°C to 180°C. These reactions may be conducted in the presence or absence of an ancillary diluent or liquid reaction medium, such as a mineral lubricating oil solvent. If the reaction is conducted in the absence of an ancillary solvent of this type, such is usually added to the reaction product on completion of the reaction. In this way the final product is in the form of a convenient solution in lubricating oil and thus is compatible with a lubricating oil base stock. Suitable solvent oils are the same as the oils used as a lubricating oil base stock and these generally include lubricating oils having a viscosity (ASTM D 445) of 2 to 40, preferably 3 to 12 mm²/sec at 100°C, with the primarily paraffinic mineral oils such as Solvent 100 Neutral being particularly preferred. Other types of lubricating oil base stocks can be used, such as synthetic lubricants including polyesters, poly-α-olefins (e.g., hydrogenated or unhydrogenated α-olefin oligomers such as hydrogenated poly-1-decene), and the like. Blends of mineral oil and synthetic lubricating oils are also suitable for various applications in accordance with this invention.

Finished lubricating oil compositions of this invention are prepared containing the dispersant of this invention together with conventional amounts of other additives to provide their normal attendant functions. Thus use may be made of such conventional additives as viscosity index improvers, dispersant viscosity index improvers, rust inhibitors, metal detergent additives, antioxidants, antiwear additives, extreme pressure additives, and the like. Reference may be had to the various U.S. patents referred to hereinabove for exemplary disclosures of various conventionally used additives for lubricating oils.

A particularly preferred ancillary additive used in the lubricant compositions is a grafted copolymer dispersant VI improver of the type described in US-A-4,519,929.

For gasoline engine lubricating oils to meet the current "SG" designation of the American Petroleum Institute, crankcase lubricating oils formulated for use in spark ignition internal combustion engines must equal or exceed certain values in the MS Sequence VE Engine Test. This test method simulates severe field service for crankcase oils, characterized by a combination of low speed and load, low temperature, "stop and go" city operation and moderate speed highway operation. The test procedure, which utilizes a Ford 2.3 litre in-line four cylinder engine, consists of 72 repetitive four hour cycles, for a total of 288 hours of engine operation. Each cycle in turn consists of three specified stages of operation. After completion of the test, the engine is disassembled for rating and various specified measurements are made.

For dispersancy, the significant values in this test for SG performance are minimums of 9.0 sludge, 6.5 piston varnish, and 5.0 average varnish.

The Volkswagen P.VW 3334 Seal Test involves keeping a test specimen of fluoroelastomer (VITON AK6) in an oil blend at 150°C for 96 hours and then comparing both the change in elongation to break and the tensile strength of the test specimen to the corresponding properties of a fresh specimen of the same fluoroelastomer. The exposed test specimen is also examined for the presence of cracks. In these tests. a lubricant passes the test if the exposed test specimen exhibits a change in elongation to break (as compared to an untested specimen) of no more than -25% and in tensile strength (as compared to an untested specimen) of no more than -20%, and possesses no cracks. Another test which can be used to measure the effective lubricant additives on fluoroelastomers is the CCMC Viton Seal Test, CEC L-39-T-87 Oil/Elastomer Compatibility Test. This test is similar to the VW Test except that it is a 7-day test rather than a 4-day test, the elastomer is VITON RE I, and the pass/fail points are -50% tensile strength and -60% elongation. Experiments conducted to date indicate that the CCMC Seal Test is less stringent than the VW Seal Test.

The practice and the benefits achievable by the practice of this invention are illustrated in the following specific examples which are not to be construed as limitations on this invention.

### EXAMPLE 1

In a first stage reaction, polyisobutenylsuccinic anhydride (PIBSA) formed from polyisobutylene (number average molecular weight = 1300) and tetraethylene pentamine (TEPA) in a mole ratio of 2.05:1 are reacted at 165-170°C for 4 hours. In a second stage reaction, maleic anhydride (MA) is added to the first stage reaction product in amount equivalent to 1 mole per mole of TEPA used in the first stage and the resultant mixture is heated at 165-170°C for 1.5 hours. The succinimide is thus formed using a total mole ratio of anhydrides to TEPA of 3.05:1. The mole ratio of PIBSA:MA in this synthesis is 2.05:1 To provide a handleable concentrate, the reaction product is suitably diluted with 100 solvent neutral mineral oil such that the nitrogen content of the blend is about 1.8%.

### EXAMPLE 2

The same general procedure as in Example 1 is employed except that the PIBSA:TEPA mole ratio in the first stage is 2.3:1 and that in the second stage the MA is used in amount equivalent to a mole ratio of 1:1 relative to the TEPA used in the first stage. The total mole ratio of anhydrides to polyamine is thus 3.3:1, and the mole ratio of PIBSA:MA is 2.3:1.

### EXAMPLE 3

In a first stage reaction, PIBSA formed from polyisobutylene (number average molecular weight = 1300) and TEPA in a mole ratio of 2.05:1 are reacted at 165-170°C for 4 hours. In a second stage reaction, maleic acid is added to the first stage reaction product in amount equivalent to one mole per mole of TEPA used in the first stage and the resultant mixture is heated at 165-170°C for 1.5 hours. The succinimide is thus formed using a total mole ratio of acylating agents to TEPA of 3.05:1, and the mole ratio of PIBSA to maleic acid is 2.05:1. As in Example 1, the reaction product is suitably diluted with mineral oil base stock to provide a handleable concentrate.

### EXAMPLE 4

The procedure of Example 3 is repeated except that fumaric acid is used in the second stage in amount equivalent to a mole ratio of 1:1 relative to the TEPA used in the first stage. Thus the total mole ratio of acylating agents to polyamine is 3.05:1, and the mole ratio of PIBSA to fumaric acid is 2.05:1.

### EXAMPLE 5

The procedure of Example 4 is repeated using an equivalent amount of malic acid in lieu of fumaric acid in the second stage. The total mole ratio of acylating agents to polyamine is 3.05:1, and the mole ratio of PIBSA to malic acid is 2.05:1.

### EXAMPLE 6

The first stage reaction involves reaction of PIBSA and TEPA in a mole ratio of 2.3:1. The reaction is conducted at 165-170°C for 4 hours. In the second stage, maleic anhydride is employed in an amount equivalent to 0.75 mole per mole of TEPA used in the first stage, and the reaction is conducted at 165-170°C for 1.5 hours. The resultant succinimide is thus formed using a total mole ratio of acylating agents to TEPA of 3.05:1. The mole ratio of PIBSA to MA is 3.07:1. For ease of handling, the result product is diluted with mineral oil.

### COMPARATIVE EXAMPLES A - H

A group of succinimides was produced in which the PIBSA:TEPA mole ratio in the first stage was 2.05:1. In the respective second stages, individual portions of the resultant product were reacted individually with oxalic acid, adipic acid, octanoic acid, acetic acid, formic acid, phthalic anhydride or alkenyl succinic anhydride in which the alkenyl group contains an average of between 20 and 24 carbon atoms. The makeup of these succinimides is as follows:

| Comparative Example | Acid | Total Mole Ratio of PIBSA + Acid:TEPA |
|---|---|---|
| A | Oxalic | 3.05:1 |
| B | Adipic | 3.05:1 |
| C | Octanoic | 3.05:1 |
| D | Acetic | 4.05:1 |
| E | Formic | 4.05:1 |
| F | Octanoic | 4.05:1 |
| G | Phthalic* | 3.05:1 |
| H | Alkenyl Succinic* | 3.05:1 |

| | | |
|---|---|---|
| * Used in the form of the anhydride | | |

### COMPARATIVE EXAMPLE I

The procedure of Example 2 is repeated except that in the first stage the PIBSA:TEPA mole ratio is 1.5:1. Thus the total mole ratio of acylating agents to polyamine is 2.5:1.

### COMPARATIVE EXAMPLE J

The procedure of Example 6 is repeated substituting fumaric acid for the maleic anhydride in the second stage. The mole ratios are: PIBSA:TEPA, 1.80:1; fumaric acid:TEPA 1:1. The total mole ratio of acylating agents to TEPA is thus 2.80:1.

Finished gasoline engine crankcase lubricating oils containing the substituted succinimide dispersants of Examples 1 and 2 were formulated. Each such oil contained 7.0% of an additive concentrate comprising, in addition to the succinimide dispersant, conventional amounts of overbased sulfonates, zinc dialkyl dithiophosphate, antioxidant, viscosity index improver, rust inhibitor, and antifoam agent to provide an SAE 15W/40 crankcase lubricating oil. The amount of succinimide dispersant in the concentrates was such as to provide a nitrogen content in the concentrate of 1.8%. Each finished lubricating oil composition was blended to a nitrogen content of 0.13%.

The resultant finished lubricating oils were subjected to the ASTM Sequence VE Engine Test procedure and the Volkswagen P.VW 3334 Seal Test. For comparative purposes, a corresponding lubricating oil containing a conventional commercial succinimide dispersant (at a level of 1.8% nitrogen) in the same finished formulation was subjected to the same tests. The results of this series of tests are summarized in Table 1.

**Table 1 -**

| Results of VE Engine & Seal Tests | | | | | |
|---|---|---|---|---|---|
| | | VE Engine Tests | | | |
| Test No. | Succinimide Used | Average Sludge | Piston Varnish | Average Varnish | Seal Tests |
| 1 | Example 1 | 9.1 | 6.8 | 5.6 | Pass |
| 2 | Example 2 | 9.1 | 7.0 | 5.8 | Pass |
| 3 | Example 6 | 9.3 | 7.4 | 6.9 | Pass |
| 4 | Control** | 9.1 | 7.4 | 6.8 | Fail |
| 5 | Example J | 8.3 | 7.2 | 6.4 | Pass |

| | | | | | |
|---|---|---|---|---|---|
| ** Formulation containing commercial succinimide dispersant | | | | | |

In order to determine the compatibility of various succinimide dispersants with fluoroelastomers, a series of finished crankcase lubricating oils for use in internal combustion engines containing various substituted succinimide dispersants were formulated. The results are summarized in Table 2. Except for Test No. 2 wherein a diesel engine crankcase formulation was employed, each such oil contained, in addition to the succinimide dispersant, conventional amounts of overbased sulfonates, zinc dialkyl dithiophosphate, antioxidant, viscosity index improver, rust inhibitor, and antifoam agent to provide an SAE 15W/40 crankcase lubricant oil. Each such lubricant contained an amount of the succinimide dispersant to provide a nitrogen content of 0.13%.

The resultant finished lubricating oils were subjected to the Volkswagen P.VW 3334 Seal Test. The results of this series of tests are summarized in Table 2.

**Table 2 -**

| Results of Volkswagen Seal Tests | | | | |
|---|---|---|---|---|
| Test No. | Succinimide Used | Change in Elongation to Break Compared to Fresh Seal, % | Tensile Strength Compared to Fresh Seal, % | Cracking |
| 1 | Example 1 | -9 | -18 | Pass |
| 2 | Example 1 | None | +4 | Pass |
| 3 | Example 2 | +3 | -2 | Pass |
| 4 | Example 3 | -10 | -10 | Pass |
| 5 | Example 4 | -17 | -17 | Pass |
| 6 | Example 5 | -13 | -14 | Pass |
| 7 | Control* | -45 | -58 | Fail |
| 8 | Example A | -41 | -46 | Fail |
| 9 | Example B | -39 | -44 | Fail |
| 10 | Example C | -59 | -59 | Fail |
| 11 | Example D | -48 | -55 | Fail |
| 12 | Example E | -46 | -51 | Fail |
| 13 | Example F | -60 | -61 | Fail |
| 14 | Example G | -45 | -52 | Fail |
| 15 | Example H | -30 | -33 | Fail |
| 16 | Example I | -29 | -35 | Pass |

| | | | | |
|---|---|---|---|---|
| * Formulation containing commercial succinimide dispersant | | | | |

It will be noted from the data in Table 2 that all of the formulations containing the succinimides produced in accordance with this invention exhibited superior fluoroelastomer compatibility as compared to the commercial succinimide dispersant. Moreover, these lubricants satisfied the requirements of the stringent Volkswagen Seal Test. In contrast, the succinimides not produced pursuant to this invention (Examples A-I and the control) did not pass the Volkswagen Seal Test.

The dispersants utilized according to the invention can be incorporated in a wide variety of lubricants. They can be used in lubricating oil compositions, such as automotive crankcase lubricating oils, automatic transmission fluids. or gear oils in effective amounts to provide active ingredient concentrations in finished formulations generally within the range of 0.5 to 10 weight percent, for example, 1 to 9 weight percent, preferably 2 to 8 weight percent. of the total composition. Conventionally, the dispersants are admixed with the lubricating oils as dispersant solution concentrates which usually contain up to about 50 weight percent of the active ingredient additive compound dissolved in mineral oil. preferably a mineral oil having an ASTM D-445 viscosity of 2 to 40, preferably 3 to 12 centistokes at 100°C. The lubricating oil not only can be hydrocarbon oils of lubricating viscosity derived from petroleum but also can be natural oils of suitable viscosities such as rapeseed oil, and synthetic lubricating oils such as hydrogenated polyolefin oils; poly-α-olefins (e.g., hydrogenated or unhydrogenated α-olefin oligomers such as hydrogenated poly-1-decene); alkyl esters of dicarboxylic acids; complex esters of dicarboxylic acid, polyglycol and alcohol; alkyl esters of carbonic or phosphoric acids; polysilicones; fluorohydrocarbon oils; and mixtures or lubricating oils and synthetic oils in any proportion. The term "lubricating oil" for this disclosure includes all the foregoing. The useful dispersant may be conveniently dispersed as a concentrate of 10 to 80 weight percent of mineral oil, e.g., Solvent 100 Neutral oil with or without other additives being present and such concentrates are a further embodiment of this invention.

As noted above, such lubricating oils compositions containing the dispersants of the present invention will also contain other well-known additives such as the zinc dialkyl (C₃-C₈) and/or diaryl (C₆-C₁₀) dithiophosphate wear inhibitors, generally present in amounts of 0.5 to 5 weight percent. Useful detergents include the oil-soluble normal basic or overbased metal. e.g.. calcium, magnesium, or barium, salts of petroleum naphthenic acids, petroleum sulfonic acids, alkyl benzene sulfonic acids, oil-soluble fatty acids. alkyl salicylic acids, sulfurized or unsulfurized alkyl phenates, and hydrolyzed or unhydrolyzed phosphosulfurized polyolefins. Gasoline engine crankcase lubricants typically contain, for example, from 0.5 to 5 weight percent of one or more detergent additives. Diesel engine crankcase oils may contain substantially higher levels of detergent additives. Preferred detergents are the calcium and magnesium normal or overbased phenates, sulfurized phenates or sulfonates.

Oxidation inhibitors include hindered phenols (e.g., 2,6-di-tert-butyl-para-cresol, 2,6-di-tert-butyl-phenol, 4,4'-methylenebis(2,6-di-tert-butylphenol), and mixed methylene bridged polyalkyl phenols. amines. sulfurized phenols and alkyl phenothiazines. Antioxidants are usually present in the lubricant in amounts of from 0.001 to 1 weight percent.

Pour point depressants which may be present in the oil in amounts of from 0.01 to 1 weight percent include wax alkylated aromatic hydrocarbons, olefin polymers and copolymers, and acrylate and methacrylate polymers and copolymers.

Viscosity index improvers, the concentrations of which in the lubricants may vary from 0.2 to 15 weight percent, (preferably from 0.5 to 5 weight percent) depending on the viscosity grade required, include hydrocarbon polymers grafted with, for example, nitrogen-containing monomers, olefin polymers such as polybutene, ethylene-propylene copolymers, hydrogenated polymers and copolymers and terpolymers of styrene with isoprene and/or butadiene, polymers of alkyl acrylates or alkyl methacrylates, copolymers of alkyl methacrylates with N-vinyl pyrrolidone or dimethylaminoalkyl methacrylate, post-grafted polymers of ethylene-propylene with an active monomer such as maleic anhydride which may be further reacted with an alcohol or an alkylene polyamine, styrene/maleic anhydride polymers post-treated with alcohols and amines.

Antiwear activity can be provided by 0.01 to 2 weight percent in the oil of the aforementioned metal dihydrocarbyl dithiophosphates and the corresponding precursor esters, phosphosulfurized pinenes, sulfurized olefins and hydrocarbons, sulfurized fatty esters and alkyl polysulfides. Preferred are the zinc dihydrocarbyl dithiophosphates which are salts of dihydrocarbyl esters of dithiophosphoric acids.

Other additives include effective amounts of friction modifiers or fuel economy additives such as the alkyl phosphonates as disclosed in US-A-4,356,097, aliphatic hydrocarbyl substituted succinimides as disclosed in EP-A-0020037, dimer acid esters, as disclosed in US-A-4,105.571, oleimide, which are present in the oil in amounts of 0.1 to 5 weight percent. Glycerol oleates are another example of fuel economy additives and these are usually present in very small amounts, such as 0.05 to 0.2 weight percent based on the weight of the formulated oil.

## Claims

1. A dispersant prepared by a process which comprises (i) reacting at least one polyamine with at least one acyclic hydrocarbyl substituted succinic acylating agent in which the substituent contains an average of at least 70 carbon atoms, and (ii) reacting the product so formed with an aliphatic vicinal dicarboxylic acylating agent selected from maleic anhydride, maleic acid, fumaric acid, malic acid and the corresponding acid halides and esters with lower alcohols, the process being characterised in that in step (i) the acylating agent is reacted with the polyamine in a mole ratio of from 1.05 to 2.85 moles of acylating agent per mole of polyamine, in that in step (ii) the vicinal dicarboxylic acylating agent is employed in an amount sufficient to provide a total mole ratio of 3.05 to 4.5 moles of acylating agents per mole of polyamine, and in that the reactants are employed in relative proportions such that the molar ratio of acylating agent(s) in (i): acylating agent(s) in (ii) is at least 1.45:1.

2. A composition as claimed in claim 1 wherein the hydrocarbyl substituted succinic acylating agent used in (i) comprises polyisobutenylsuccinic acid, polyisobutenylsuccinic, anhydride, or a combination of polyisobutenylsuccinic acid and polyisobutenylsuccinic anhydride having a number average molecular weight in the range of 1,200 to 5,000 as determined by gel permeation chromatography; and wherein the polyamine used comprises alkylene polyamine of the formula
H₂N(CH₂)ₙ(NH(CH₂)ₙ)ₘNH₂
wherein each n is, independently, 2, 3 or 4 and m is 0 to 10.

3. A composition as claimed in claim 1 wherein the hydrocarbyl substituted succinic acylating agent used in (i) comprises polyisobutenylsuccinic acid, polyisobutenylsuccinic anhydride, or a combination of polyisobutenylsuccinic acid and polyisobutenylsuccinic anhydride having a number average molecular weight in the range of 1,200 to 5,000 as determined by gel permeation chromatography; and wherein the polyamine used comprises tetraethylene pentamine or a combination of ethylene polyamines which approximate tetraethylene pentamine.

4. A composition as claimed in claim 1 wherein the reactants are employed in relative proportions such that the molar ratio of acylating agent(s) in (i): acylating agent(s) in (ii) is in the range of 1.45:1 to 2.70:1.

5. A process which comprises (i) reacting at least one polyamine with at least one acyclic hydrocarbyl substituted succinic acylating agent in which the substituent contains an average of at least 70 carbon atoms, and (ii) reacting the product so formed with an aliphatic vicinal dicarboxylic acylating agent selected from maleic anhydride, maleic acid, fumaric acid, malic acid and the corresponding acid halides and esters with lower alcohols, the process being characterised in that in step (i) the acylating agent is reacted with the polyamine in a mole ratio of from 1.05 to 2.85 moles of acylating agent per mole of polyamine, in that in step (ii) the vicinal dicarboxylic acylating agent is employed in an amount sufficient to provide a total mole ratio of 3.05 to 4.5 moles of acylating agents per mole of polyamine, and in that the reactants are employed in relative proportions such that the molar ratio of acylating agent(s) in (i): acylating agent(s) in (ii) is at least 1.45:1.

6. A lubricating oil composition a major amount of lubricating oil and minor amount of a dispersant as claimed in any one of claims 1 through 4 inclusive.

7. A lubricating oil composition comprising a major amount of lubricating oil and minor amount of a dispersant as claimed in any one of claims 1 through 4 inclusive, said composition being further characterised by satisfying the requirements of the ASTM Sequence VE engine tests for API "SG" performance, and the requirements of the Volkswagen P.VW 3334 Seal Test, both such tests being in the form referred to in the specification hereof.

8. A lubricating oil composition according to claim 6 comprising a major amount of lubricating oil and a minor amount of a dispersant as claimed in any one of claims 1 through 4 inclusive, said composition further comprising at least one overbased sulfonate, or at least one zinc dialkyl dithiophosphate, or at least one antioxidant, or at least one viscosity index improver, or at least one rust inhibitor, or at least one antifoam agent, or any combination of two or more of the foregoing.

9. A lubricating oil additive concentrate containing a dispersant as claimed in any one of claims 1 through 4 inclusive.

10. A method of lubricating mechanical parts with a lubricating oil composition containing a dispersant in the presence of at least one fluoroelasotmer surface is characterised in that the lubrication is performed with a lubricating oil composition:-
containing a dispersant according to any one of claims 1 through 4 inclusive; or
according to any one of claims 6 through 8 inclusive.

## Patentansprüche

1. Dispergiermittel, das mittels eines Verfahren hergestellt wurde, bei dem man
(i) mindestens ein Polyamin mit mindestens einem durch ein acyclisches Hydrocarbyl substituierten Bernsteinsäureacylierungmittel, in dem der Substituent durchschnittlich mindestens 70 Kohlenstoffatome aufweist, zur Umsetzung bringt und
(ii) das auf diese Weise hergestellte Produkt mit einer aus Maleinsäureanhydrid, Maleinsäure, Fumarsäure, Äpfelsäure und den entsprechenden Säurehalogeniden und Estern mit niederen Alkoholen ausgewählten aliphatischen vicinalen Dicarbonsäure als Acylierungsmittel zur Umsetzung bringt,
wobei das Verfahren dadurch gekennzeichnet ist, daß in Schritt (i) das Acylierungsmittel mit dem Polyamin in einem Molverhältnis von 1,05 bis 2,85 Mol Acylierungsmittel pro Mol Polyamin zur Umsetzung gebracht wird, in Schritt (ii) das vicinale Dicarbonsäureacylierungsmittel in einer Menge eingesetzt wird, die ein Gesamtmolverhältnis von 3,05 bis 4,5 Mol Acylierungsmittel pro Mol Polyamin ergibt, und die Reaktanten in solchen relativen Verhältnissen eingesetzt werden, daß das Molverhältnis des oder der Acylierungsmittel in (i) zu dem oder den Acylierungsmitteln in (ii) mindestens 1,45 : 1 beträgt.

2. Zusammensetzung nach Anspruch 1, in der das in Schritt (i) verwendete, mit Hydrocarbyl substituierte Bernsteinsäureacylierungsmittel Polyisobutenylbernsteinsäure, Polyisobutenylbernsteinsäureanhydrid oder eine Kombination aus Polyisobutenylbernsteinsäure und Polyisobutenylbernsteinsäureanhydrid mit einem durch Gelpermationschromatographie bestimmten zahlenmittleren Molekulargewicht im Bereich von 1.200 bis 5.000 enthält und das verwendete Polyamin Alkylenpolyamin der Formel
H₂N(CH₂)ₙ(NH(CH₂)ₙ)ₘNH₂
enthält, in der jedes n unabhängig voneinander 2, 3 oder 4 bedeutet und m 0 bis 10 ist.

3. Zusammensetzung nach Anspruch 1, in der das in Schritt (i) verwendete, mit Hydrocarbyl substituierte Bernsteinsäureacylierungsmittel Polyisobutenylbernsteinsäure, Polyisobutenylbernsteinsäureanhydrid oder eine Kombination aus Polyisobutenylbernsteinsäure und Polyisobutenylbernsteinsäureanhydrid mit einem durch Gelpermationschromatographie bestimmten zahlenmittleren Molekulargewicht im Bereich von 1.200 bis 5.000 enthält und das verwendete Polyamin Tetraethylenpentamin oder eine Tetraethylenpentamin annähernd entsprechende Kombination von Ethylenpolyaminen aufweist.

4. Zusammensetzung nach Anspruch 1, bei der die Reaktanten in solchen Mengenverhältnissen zueinander eingesetzt werden, daß das Molverhältnis des oder der Acylierungsmittel in Schritt (i) zu dem oder den Acylierungsmitteln in Schritt (ii) im Bereich von 1,45 : 1 bis 2,70 : 1 liegt.

5. Verfahren, bei dem man
(i) mindestens ein Polyamin mit mindestens einem durch ein acyclisches Hydrocarbyl substituierten Bernsteinsäureacylierungmittel, in dem der Substituent durchschnittlich mindestens 70 Kohlenstoffatome aufweist, zur Umsetzung bringt und
(ii) das auf diese Weise hergestellte Produkt mit einer aus Maleinsäureanhydrid, Maleinsäure, Fumarsäure, Äpfelsäure und den entsprechenden Säurehalogeniden und Estern mit niederen Alkoholen ausgewählten aliphatischen vicinalen Dicarbonsäure als Acylierungsmittel zur Umsetzung bringt,
wobei das Verfahren dadurch gekennzeichnet ist, daß in Schritt (i) das Acylierungsmittel mit dem Polyamin in einem Molverhältnis von 1,05 bis 2,85 Mol Acylierungsmittel pro Mol Polyamin zur Umsetzung gebracht wird, in Schritt (ii) das vicinale Dicarbonsäureacylierungsmittel in einer Menge eingesetzt wird, die ein Gesamtmolverhältnis von 3,05 bis 4,5 Mol Acylierungsmittel pro Mol Polyamin gewährleistet, und die Reaktanten in solchen relativen Verhältnissen eingesetzt werden, daß das Molverhältnis des oder der Acylierungsmittel in (i) zu dem oder den Acylierungsmitteln in (ii) mindestens 1,45 : 1 beträgt.

6. Schmierölzubereitung mit einem größeren Anteil Schmieröl und einem kleineren Anteil eines Dispergiermittels nach einem der Ansprüche 1 bis 4.

7. Schmierölzubereitung mit einem größeren Anteil Schmieröl und einem kleineren Anteil eines Dispergiermittels nach einem der Ansprüche 1 bis 4, die außerdem dadurch gekennzeichnet ist, daß sie den Erfordernissen des ASTM-Sequence VE-Motorentests in bezug auf die API-"SG"-Leistungsfähigkeit und den Erfordernissen des Volkswagen-P.VW 3334 Dichtungstests entspricht, wobei beide diese Tests in der Form vorgenommen wurden, auf die in der Beschreibung bezug genommen wird.

8. Schmierölzubereitung nach Anspruch 6, die einen größeren Anteil Schmieröl und einen kleineren Anteil eines Dispergiermittels nach einem der Ansprüche 1 bis 4 enthält und außerdem mindestens ein überbasisches Sulfonat, mindestens ein Zinkdialkyldithiophosphat, mindestens ein Antioxidans, mindestens ein Mittel zur Verbesserung des Viskositätsindex, mindestens ein Rostschutzmittel, mindestens einen Schaumbremser oder eine beliebige Kombination aus zwei oder mehreren der vorstehenden Komponenten aufweist.

9. Schmieröladditivkonzentrat mit einem Gehalt eines Dispergiermittels gemäß einem der Ansprüche 1 bis 4.

10. Verfahren zum Schmieren mechanischer Teile mit einer Schmierölzubereitung mit einem Dispergiermittel in Anwesenheit mindestens einer Fluorelastomeroberfläche, dadurch gekennzeichnet, daß mit einer Schmierölzubereitung geschmiert wird, die ein Dispergiermittel nach einem der Ansprüche 1 bis 4 oder 6 bis 8 enthält.

## Revendications

1. Dispersant préparé par un procédé qui comprend (i) la réaction d'au moins une polyamine avec au moins un agent acylant succinique à substituant hydrocarbyle acyclique dans lequel le substituant contient un nombre moyen d'au moins 70 atomes de carbone, et (ii) la réaction du produit ainsi formé avec un agent acylant dicarboxylique vicinal aliphatique choisi entre l'anhydride maléique, l'acide maléique, l'acide fumarique, l'acide malique et les halogénures d'acides correspondants et esters correspondants formés avec des alcools inférieurs, le procédé étant caractérisé en ce que, dans l'étape (i), l'agent acylant est amené à réagir avec la polyamine en un rapport molaire de 1,05 à 2,85 moles d'agent acylant par mole de polyamine, en ce que, dans l'étape (ii), l'agent acylant dicarboxylique vicinal est utilisé en une quantité suffisante pour parvenir à un rapport molaire total de 3,05 à 4,5 moles d'agents acylants par mole de polyamine, et en ce que les corps réactionnels sont utilisés en des proportions relatives telles que le rapport molaire agent(s) acylant(s) en (i) : agent(s) acylant(s) en (ii) soit au moins égal à 1,45:1.

2. Composition suivant la revendication 1, dans laquelle l'agent acylant succinique à substituant hydrocarbyle utilisé en (i) comprend l'acide polyisobuténylsuccinique, l'anhydride polyisobuténylsuccinique ou une association d'acide polyisobuténylsuccinique et d'anhydride polyisobuténylsuccinique ayant une moyenne numérique du poids moléculaire comprise dans l'intervalle de 1200 à 5000, telle qu'elle est déterminée par chromatographie de perméation sur gel ; et dans laquelle la polyamine utilisée comprend une alkylènepolyamine de formule
H₂N(CH₂)ₙ(NH(CH₂)ₙ)ₘNH₂
dans laquelle chaque indice n est égal, indépendamment, à 2, 3 ou 4 et m a une valeur de 0 à 10.

3. Composition suivant la revendication 1, dans laquelle l'agent acylant succinique à substituant hydrocarbyle utilisé dans l'étape (i) comprend l'acide polyisobuténylsuccinique, l'anhydride polyisobuténylsuccinique ou une association d'acide polyisobuténylsuccinique et d'anhydride polyisobuténylsuccinique ayant une moyenne numérique du poids moléculaire comprise dans l'intervalle de 1200 à 5000, telle qu'elle est déterminée par chromatographie de perméation sur gel ; et dans laquelle la polyamine utilisée comprend la tétraéthylènepentamine ou une association d'éthylènepolyamines correspondant approximativement à la tétraéthylènepentamine.

4. Composition suivant la revendication 1, dans laquelle les corps réactionnels sont utilisés en des proportions relatives telles que le rapport molaire agent(s) acylant(s) dans l'étape (i) : agent(s) acylant(s) dans l'étape (ii) soit compris dans l'intervalle de 1,45:1 à 2,70:1.

5. Procédé qui comprend (i) la réaction d'au moins une polyamine avec au moins un agent acylant succinique à substituant hydrocarbyle acyclique dans lequel le substituant contient un nombre moyen d'au moins 70 atomes de carbone, et (ii) la réaction du produit ainsi formé avec un agent acylant dicarboxylique vicinal aliphatique choisi entre l'anhydride maléique, l'acide maléique, l'acide fumarique, l'acide malique et les halogénures d'acides correspondants et esters correspondants formés avec des alcools inférieurs, le procédé étant caractérisé en ce que, dans l'étape (i), l'agent acylant est amené à réagir avec la polyamine en un rapport molaire de 1,05 à 2,85 moles d'agent acylant par mole de polyamine, en ce que, dans l'étape (ii), l'agent acylant dicarboxylique vicinal est utilisé en une quantité suffisante pour parvenir à un rapport molaire total de 3,05 à 4,5 moles d'agents acylants par mole de polyamine, et en ce que les corps réactionnels sont utilisés en des proportions relatives telles que le rapport molaire agent(s) acylant(s) dans l'étape (i) : agent(s) acylant(s) dans l'étape (ii) soit au moins égal à 1,45:1.

6. Composition d'huile lubrifiante comprenant une quantité dominante d'une huile lubrifiante et une quantité secondaire d'un dispersant suivant l'une quelconque des revendications 1 à 4 incluse.

7. Composition d'huile lubrifiante comprenant une quantité dominante d'une huile lubrifiante et une quantité secondaire d'un dispersant suivant l'une quelconque des revendications 1 à 4 incluse, ladite composition étant caractérisée en outre en ce qu'elle répond aux conditions des essais sur moteur ASTM Séquence VE pour les performances API "SG", et aux conditions de l'essai d'étanchéité Volkswagen P.VW 3334, ces deux essais étant sous la forme mentionnée dans leur description.

8. Composition d'huile lubrifiante suivant la revendication 6, comprenant une quantité dominante d'une huile lubrifiante et une quantité secondaire d'un dispersant suivant l'une quelconque des revendications 1 à 4 incluse, ladite composition comprenant en outre au moins un sulfonate surbasique, ou au moins un dialkyldithiophosphate de zinc, ou au moins un anti-oxydant, ou au moins un agent améliorant l'indice de viscosité, ou au moins un additif anti-rouille, ou au moins un agent antimousse, ou bien n'importe quelle association de deux ou plus de deux des constituants précités.

9. Concentré d'additif pour huile lubrifiante, contenant un dispersant suivant l'une quelconque des revendications 1 à 4 incluse.

10. Procédé de lubrification de pièces mécaniques avec une composition d'huile lubrifiante contenant un dispersant en présence d'au moins une surface de fluoroélastomère, caractérisé en ce que la lubrification est effectuée avec une composition d'huile lubrifiante :
contenant un dispersant suivant l'une quelconque des revendications 1 à 4 incluse ; ou
suivant l'une quelconque des revendications 6 à 8 incluse.
